# EUROPEAN PATENT APPLICATION

(11) **EP 1 553 259 A1**
(43) Date of publication of application: **13.07.2005**
(21) Application number: 04100080.3
(22) Date of filing: 12.01.2004
(51) Int. Cl.: E06B 9/58, E06B 9/44, B60J 1/20

(54) **Sunscreen assembly**

(71) Applicant: Inalfa Roof Systems Group B.V., 5804 AH Venray (NL)
(72) Inventor: Denissen, Louisa, Catharina, Petronella, 5821 BN, Vierlingsbeek (NL)
(74) Representative: Voncken, Bartholomeus Maria Christiaan

(57) **Abstract**

A sunscreen assembly is provided comprising a sunscreen (3) with two opposite lateral edge regions (4,5) which are slidingly housed in corresponding guides (6,7) extending along said lateral edge regions (4,5) of the sunscreen (3), and a rotatable winding tube for the sunscreen (3). The lateral edge regions (4,5) have a self-locking configuration allowing an easy introduction of said lateral edge regions (4,5) into the corresponding guides (6,7) but withstanding the retraction therefrom. A specially adapted winding tube for such a sunscreen (3) is provided.

## Description

The invention relates to a sunscreen assembly, comprising a sunscreen with two opposite lateral edge regions which are slidingly housed in corresponding guides extending along said lateral edge regions of the sunscreen, and a rotatable winding tube for the sunscreen.

During normal operation of such a sunscreen assembly the sunscreen is wound on or off the rotatable winding tube, while its opposite lateral edge regions slide in the guides. When the sunscreen assembly is in a closed position, in which the sunscreen is wound off the rotatable winding tube, there is a risk that external forces acting on the sunscreen cause the lateral edge regions to get disengaged from the guides. As a result, the sunscreen is not positioned properly anymore, which can hamper properly winding it again on the winding tube, whereas further a non-esthetical appearance is obtained.

It is an object of the present invention to improve a sunscreen assembly of the type referred to above in such manner, that the above-mentioned disadvantage is eliminated.

Thus, in accordance with the present invention a sunscreen assembly is provided comprising a sunscreen with two opposite lateral edge regions which are slidingly housed in corresponding guides extending along said lateral edge regions of the sunscreen, and a rotatable winding tube for the sunscreen, characterized in that the lateral edge regions have a self-locking configuration allowing an easy introduction of said lateral edge regions into the corresponding guides but withstanding the retraction therefrom.

Due to the self-locking configuration of the lateral edge regions the introduction thereof into the corresponding guides (when the sunscreen assembly is being mounted) is very easy. However, when during use of the sunscreen assembly an external force acts on the sunscreen, this self-locking configuration of the lateral edge regions will avoid a retraction of said edge regions from the guides.

In a preferred embodiment of the sunscreen assembly according to the present invention, the lateral edge regions of the sunscreen are provided with strips of material extending longitudinally along said edge regions, wherein each strip of material is attached to a corresponding edge region in such a manner that it is entirely positioned close to the sunscreen when said edge region is introduced in a corresponding guide, and is at least partially moved away from the sunscreen when one attempts to retract said edge region from the corresponding guide, and wherein each guide has a guide channel for a lateral edge region of the sunscreen separated from the surroundings by a narrowed slot, the width of said slot being sufficient to pass therethrough the edge region with strip only when the strip is positioned close to the sunscreen.

The application of these strips of material provides a simple, yet nevertheless effective manner of providing the self-locking configuration. Furthermore, such strips of material on one hand provide an effective manner of preventing a retraction of the lateral edge regions from the guides, but on the other hand do not or hardly create any additional friction of the sunscreen relative to the guides, such that the movement of the sunscreen between its open and closed positions is not hampered in any way.

When, in accordance with the above, a strip of material is provided, it is preferred that such strip of material is attached to one face of the edge region of the sunscreen, the attachment being realised in such a manner that the strip has located inside of the location of attachment a part sufficient wide to move away from the sunscreen for withstanding the retraction of said edge region from the guide.

Such a configuration of the lateral edge region with a strip of material attached to only one face of the edge region enables an effective operation, yet minimizes the thickness of the sunscreen at the lateral edge regions.

For obtaining an effective operation of the strip of material as mentioned above, it further is preferred that said strip of material has an outer edge substantially coinciding with the outer edge of the edge region and an inner edge directed towards the center of the sunscreen, the location of attachment of the strip to the edge region of the sunscreen being positioned nearer to said outer edge than to said inner edge.

The part of the strip of material positioned inside of the location of attachment will act as a means for preventing a retraction of the lateral edge region from the corresponding guide.

To ensure, that the self-locking function of the lateral edge region always occurs, there is the possibility that the strips of material are biased to move away from the edge regions. In such a case, however, there will be some increase of friction between the lateral edge regions and the guides.

The provisions of such strips of material at the lateral edge regions of the sunscreen will inevitably lead to a local increase of the thickness of the sunscreen (although such an increase of thickness can be minimised by an appropriate choice of material of the strips of material). Such an increase of thickness of the lateral edge regions of the sunscreen will have its bearing on the behaviour of the sunscreen when it is wound onto the winding tube. Generally, the winding of the sunscreen on the winding tube will be more irregular in such a case.

To avoid such a disadvantage, in a preferred embodiment of the sunscreen assembly according to the present invention the winding tube is provided with circumferential depressions at locations corresponding with the position of the strips of material.

Such circumferential depressions allow the local package of the sunscreen with increased thickness (comprising subsequent windings of the lateral edge regions) to be partially housed therein, such that the sunscreen can be wound more regularly onto the winding tube.

Although such circumferential depressions can be provided in the winding tube itself (such that at both ends of each depression the original winding tube extends), it is also possible that the winding tube has a reduced length compared to the width of the sunscreen, such that the edge regions with strips of material extend beyond the outer ends of the winding tube. Thus, the edge regions with strips of material will be positioned beyond the outer end of the winding tube, such that those regions can slightly bent inwardly relative to the winding tube, thus providing a more regular winding of the sunscreen onto the winding tube.

Although the sunscreen assembly according to the present invention may have many application, it preferably is intended for use in an open roof construction for a vehicle.

Hereinafter the invention will be elucidated while referring to the drawing, in which an embodiment of the sunscreen assembly according to the present invention is illustrated.
Figure 1 shows, schematically, a top plan view of a sunscreen assembly provided in an open roof construction for a vehicle;
figure 2 shows a cross section of an embodiment of a sunscreen assembly according to the present invention;
figure 3 shows a detail of the sunscreen assembly illustrated in figure 2, while introducing a lateral edge region in a guide;
figure 4 shows a view corresponding to fig. 3, however while attempting to retract said lateral edge region from the guide;
figure 5 shows, partially, a longitudinal section through a winding tube with sunscreen wound thereon in a first embodiment, and
figure 6 shows, in correspondence with fig. 5, a second embodiment.

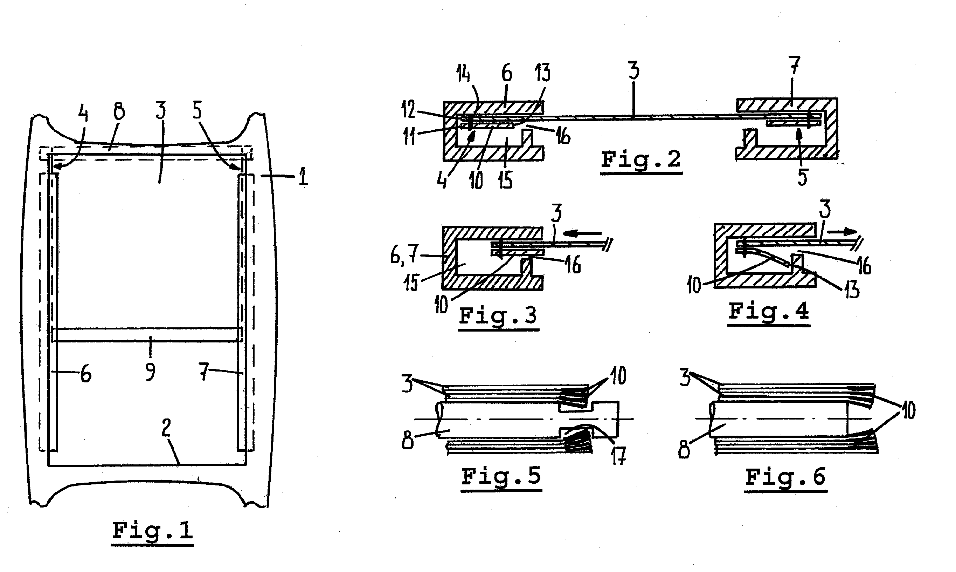

Firstly referring to fig. 1, part of a vehicle 1 is illustrated in a top plan view, which vehicle is provided with an open roof construction. Said open roof construction comprises, among others, a roof opening 2 which, in a manner known per se, can be closed by a movable panel (not illustrated). Further said open roof construction comprises a sunscreen assembly, which basically comprises a sunscreen 3 with two opposite lateral edge regions 4, 5 which are slidingly housed in corresponding guides 6, 7 extending along said lateral edge regions of the sunscreen (and along corresponding longitudinal sides of the roof opening 2). Further the sunscreen assembly comprises a rotatable winding tube 8 for the sunscreen assembly 3. In figure 1 the sunscreen assembly is illustrated in a partly closed position. The free, forward end of the sunscreen 3 has attached thereto a transverse pulling beam 9, using which the position of the sunscreen 3 can be determined (as is know per se).

The lateral edge regions 4, 5 of the sunscreen 3 cooperate with the guides 6, 7 in such a manner that, on one hand, an easy introduction of said lateral edge regions into the corresponding guides is possible, but on the other hand a retraction of the lateral edge regions from the guides will be prevented (for example when an external force is acting upon the sunscreen 3).

Now referring to fig. 2, an embodiment of the sunscreen assembly is illustrated in a transverse cross-section. It is noted, that the vehicle has been omitted.

At each lateral edge region 4, 5 a strip of material 10 is provided which extends longitudinally along said edge regions. Each strip of material 10 is attached to one face of the edge region of the sunscreen, in the illustrated embodiment the bottom face. Each strip of material 10 has an outer edge 11 which substantially coincides with the outer edge 12 of the corresponding edge region 4, 5. Further each strip of material 10 has an inner edge 13 directed towards the center of the sunscreen 3. The location of attachment 14 of the strip 10 to the edge region 4, 5 of the sunscreen 3 (indicated by a short vertical line) is positioned nearer to said outer edge 11 than to said inner edge 13.

Each guide 6 has a guide channel 15 in which a lateral edge region 4, 5 of the sunscreen 3 will be housed. Said guide channel 15 is separated from the surroundings by a narrowed slot 16.

When a lateral edge region 4, 5 is introduced into the guide (fig. 3), the strip of material 10 is positioned close to the sunscreen 3. The width of the slot 16 is sufficient to pass therethrough the edge region with strip 10 attached thereto.

After the edge region 4, 5 with attached strip 10 has been moved into the guide channel 15 (fig. 4) a retraction of the sunscreen 3 from the guide 6, 7 is prevented because the inner edge 13 of the strip of material 10 will engage behind the narrowed slot 16 of the guide. In such a situation, the strip of material will partly move away from the sunscreen 3. The strip may be biased towards such a position.

Figure 5 and 6 show two different embodiments of a winding tube for use in combination with a sunscreen assembly according to the present invention. Figure 5 shows a winding tube 8 which is provided with circumferential depressions 17 (only one is illustrated). The location of said circumferential depressions 17 corresponds with the position of the strips of material 10 on the sunscreen 3 when the latter is being wound on the winding tube 8. It is noted, that in fig. 5 and 6 only one end of a winding tube 8 has been illustrated; the opposite end is correspondingly shaped.

When the sunscreen 3 is wound onto the winding tube 8, its edges with increased thickness (where the strip of material 10 is provided) are partly received in the depressions 17, such that notwithstanding the increased thickness of the lateral edge regions of the sunscreen 3 a regular winding of the sunscreen 3 onto the winding tube is assured.

The same effect will be obtained with the embodiment of the winding tube 8 illustrated in fig. 6: in this case, the winding tube 8 has a reduced length, such that the edge regions with strips of material extend beyond the outer ends of the winding tube.

The invention is not limited to the embodiments described before, which may be varied widely within the scope of the invention as defined by the appending claims.

## Claims

1. Sunscreen assembly, comprising a sunscreen with two opposite lateral edge regions which are slidingly housed in corresponding guides extending along said lateral edge regions of the sunscreen, and a rotatable winding tube for the sunscreen, **characterized in that** the lateral edge regions have a self-locking configuration allowing an easy introduction of said lateral edge regions into the corresponding guides but withstanding the retraction therefrom.

2. Sunscreen assembly according to claim 1, wherein the lateral edge regions of the sunscreen are provided with strips of material extending longitudinally along said edge regions, wherein each strip of material is attached to a corresponding edge region in such a manner that it is entirely positioned close to the sunscreen when said edge region is introduced in a corresponding guide, and is at least partially moved away from the sunscreen when one attempts to retract said edge region from the corresponding guide, and wherein each guide has a guide channel for a lateral edge region of the sunscreen separated from the surroundings by a narrowed slot, the width of said slot being sufficient to pass therethrough the edge region with strip only when the strip is positioned close to the sunscreen.

3. Sunscreen assembly according to claim 2, wherein each strip of material is attached to one face of the edge region of the sunscreen, the attachment being realised in such a manner that the strip has located inside of the location of attachment a part sufficient wide to move away from the sunscreen for withstanding the retraction of said edge region from the guide.

4. Sunscreen assembly according to claim 2 or 3, wherein the strip of material has an outer edge substantially coinciding with the outer edge of the edge region and an inner edge directed towards the center of the sunscreen, the location of attachment of the strip to the edge region of the sunscreen being positioned nearer to said outer edge than to said inner edge.

5. Sunscreen assembly according to any of the claims 2-4, wherein the strips of material are biased to move away from the edge regions.

6. Sunscreen assembly according to any of the claims 2-5, wherein the winding tube is provided with circumferential depressions at locations corresponding with the position of the strips of material.

7. Sunscreen assembly according to any of the claims 2-5, wherein the winding tube has a reduced length compared to the width of the sunscreen, such that the edge regions with strips of material extend beyond the outer ends of the winding tube.

8. Sunscreen assembly according to any of the previous claims and intended for use in an open roof construction for a vehicle.
